# EUROPEAN PATENT APPLICATION

(11) **EP 2 574 451 A1**
(43) Date of publication of application: **03.04.2013**
(21) Application number: 11183223.4
(22) Date of filing: 29.09.2011
(51) Int. Cl.: B29D 11/00

(54) **Method of manufacturing an optically transparent light guide**

(71) Applicant: 3M Innovative Properties Company, Saint Paul, MN 55133-3427 (US)
(72) Inventor: Heinz, Robert, 41812 Erkelenz (DE); Lingk, Oliver, 50735 Köln (DE)
(74) Representative: Bergen, Katja

(57) **Abstract**

The invention refers to a method of manufacturing an optically transparent light guide (9), said method comprising the following steps:
- providing a fluid polymeric material suitable for molding a light guide;
- providing a rigid mold (1) comprising a mold cavity (6) operatively adapted for molding the light guide, with the mold cavity comprising a first cavity part (3) and a second cavity part (2);
- disposing a stretchable layer (7) within the mold between the first and second cavity parts;
- injecting the fluid polymeric material into the first cavity part of the mold cavity so as to at least substantially fill the first cavity part and at least part of the second cavity with the fluid polymeric material;
- stretching the stretchable layer so as to be disposed at least partially into the second cavity part;
- solidifying the fluid polymeric material to form a solid light guide in the mold cavity; and
-removing the solid light guide from the mold cavity.

## Description

The invention relates generally to a method of manufacturing an optically transparent light guide. The invention also relates to an optically transparent light guide as well as to a molded light guide in combination with a stretchable layer.

Conventional methods of molding typically utilize two-piece molds. When the separate halves of a two-piece mold are mated and sealed, a liquid material can be injected into the hollow space between the halves. The contours inside this hollow space define the shape of the final molded article. The liquid is cured, and when it is sufficiently hardened, the halves may be decoupled to facilitate removal of the finished article from the mold. The halves of the mold are typically made of rigid materials to withstand the pressure and heat present in the injection and hardening process and to resist deformation during the molding process. Resistance to deformation is particularly important when the tolerances for the molded article are small.

JP 2009/172 770 discloses a method for molding an article by injection molding, wherein a metallic two-piece mold with a cavity is used. For better unmolding the article out of the mold, the known method teaches to provide a film on the surface of the cavity. The film may be used several times and stays within the cavity while the articles are being unmolded.

JP 2004/284 178 discloses another method of molding an article out of thermoplastic polymers by injection molding, wherein a mold with a cavity is used. To achieve a specific texture on the surface of the article, a film with the specific surface texture is inserted on the surface of the cavity of the mold on its surface before a fluid polymeric material is injected into the mold. After the article is cured the film is removed from the surface of the article and the specific structure is provided on the surface of the article.

EP 1 066 143 B1 refers to a method and an apparatus for micro replication using a one-piece expandable mold to thereby produce molded articles having micro structured surfaces. The expandable one-piece mold has a generally hollow portion of flexible material as well as means for expanding the flexible mold. The one-piece mold is first filled with a curable material which is hardened to form the molded articles. Once hardened, the molded articles may be removed from the one-piece mold by elastically expanding the mold. The method described in EP 1 066 143 B1 may be used to make optically transparent light guides.

In view of this prior art there is a need to provide a method of manufacturing an optically transparent light guide that is cost effective compared with known methods and that provides handling advantages in the manufacturing process, while providing a transparent light guides of high quality. There is also a need to provide optically transparent light guides as well as optically transparent light guides in combination with a stretchable layer that are manufactured by such a process.

The present invention provides a method of manufacturing an optical transparent light guide, said method comprises the following steps:
- providing a fluid polymeric material suitable for molding a light guide;
- providing a rigid mold comprising a mold cavity operatively adapted for molding a light guide, with the mold cavity comprising a first cavity part and a second cavity part;
- disposing a stretchable layer within the mold between the first and second cavity parts;
- injecting the fluid polymeric material into the first cavity part of the mold cavity so as to at least substantially fill the first cavity part and at least part of the second cavity part with the fluid polymeric material;
- stretching the stretchable layer so as to be disposed at least partially into the second cavity part;
- solidifying the fluid polymeric material to form a solid light guide in the mold cavity; and
- removing the solid light guide from the mold cavity.

An optical transparent light guide according to the invention may be an article that receives light at an input end and propagates the light to an output end or to a light extractor without significant losses. In general, light guides operate on the principle total internal reflection whereby light travelling through the light guide is reflected at the surfaces of the light guide with minimal losses. To achieve this state, it is necessary that the index of refraction of the light guide is higher than the index of refraction of the medium immediately surrounding the light guide. Optically transparent may refer to a material that is a substantial transmitter of light having a wavelength in a least a portion of the visible optical spectrum.

The light guide may provide a light extraction structure. A light extraction structure refers to an element on the surface of a light guide placed there by design to direct light out of the light guide. As such, these structures serve as areas where light rays are directed or extracted out of the light guide. In other words the light guide may be an illumination device comprising a core having a plurality of light extraction structures extending into the core.

The fluid polymeric material suitable for molding a light guide may be any curable material which comprises a polymerizable compound or mixture. Curable material may be curable by heat, radiation or other known processes. When molding an optical transparent light guide, as general class of materials, acrylates are preferred for their transparency properties. However, for many applications, a more flexible finished article is desired. In such cases urethanes have been found as being a good alternative.

The invention may be summarized by providing a conventional rigid mold with a mold cavity comprising a first cavity part and a second cavity part, operatively adapted for molding a light guide and disposing a stretchable layer into the conventional mold so that the stretchable layer separates the two cavity parts. The stretchable layer thus functions as a barrier between the two cavity parts, that does not permit any of the fluid polymeric material to bypass it. It also functions as a seal between the two mold parts so as to make it more difficult for the fluid polymeric material to squeeze out of the cavities under the injection pressures experienced when the fluid polymeric material is injected into the mold cavity. It therefore allows for higher cavity pressures without additional clamping forces which also reduces the manufacturing costs.

When the cavity parts get filled with a fluid polymeric material and the first cavity part is filled up, the stretchable layer gets stretched into the second cavity part due to more fluid polymeric material being injected than the first cavity part may hold. In an extreme case the stretchable layer gets stretched until it touches the surface of the second cavity part. All intermediate stages are possible as well. In other words, the fluid polymeric material is injected so as to completely or at least substantially fill the first cavity part of the mold at a pressure that forces the stretchable layer to stretch into the second cavity part, thereby enabling the second cavity part to be completely or at least substantially filled with the fluid polymeric material. In the context of the present invention, each of the cavity parts is substantially filled when enough of the fluid polymeric material enters the mold cavity to produce the desired solid light guide. Typically, after the first cavity part is filled, the fluid polymeric material is forced under pressure against the stretchable layer, which stretches as the fluid polymeric material fills the second cavity part. The injected fluid polymeric material is thus surrounded on one side by the surface of the first cavity part and on the opposite side by the stretchable layer. Since the injected fluid polymeric material does not contact the surface of the second cavity part, cleaning times of the mold are reduced significantly which also reduces the manufacturing costs.

Depending on the polymeric material that is used, pressure in the cavity and/or volume of the injected fluid material may vary during and/or after injection as well as during solidification. The stretchable layer may balance such variations by stretching or shrinking and will still surround the injected material on one side. It thereby may prevent surface damages on the light guide, which may occur due to shrinking during the solidifying process. The stretchable layer thus also helps to produce a light guide of high quality.

When the mold cavity part is sufficiently filled, the fluid polymeric material is solidified to form a light guide in the mold cavity. Depending on the type of fluid polymeric material used, the solid light guide can be formed, e.g. by cooling or curing or hardening or any other process by which a liquid or fluid composition is solidified.

The rigid mold may be a plastic, ceramic, metallic or otherwise rigid mold. A metallic mold can be made from any suitable elemental or alloyed metal or metal containing material. The metal mold may comprise the necessary structures for achieving the light extraction structures in the light guide. The use of a rigid mold has the advantage that the mold has a longer life cycle than expendable molds which decreases the manufacturing costs dramatically. In addition rigid moldes may be used for higher process pressures. The advantages of higher process pressures are less air inclusions, less shrinkage and a better reproduction of the structure of the surface of the mold, e.g. of a light extraction structure.

It can be desirable for the stretchable layer to be selected such that it is inflexible, rigid or stiff enough to function as a reliable barrier between the two cavity parts by sealing the two mold parts. It can also be desirable for the stretchable layer to also be selected so as to be flexible or soft enough to be stretched into the second cavity part unit it touches or approaches touching the surface of the second cavity part. According to one embodiment, the deformation during the stretching process is an elastic one. But it is also possible that the deformation during the stretching process is not elastic one. According to another aspect of the invention the stretchable layer should be selected such that it does not stick to the surface of the cavity, so that it can be easily released from the mold and from the light guide after the injection and solidifying process.

In the last step of the method according to the invention the solid light guide is removed from the mold cavity.

According to one embodiment of the invention, the fluid polymeric material may be e.g. a liquid thermosetable polymeric material that is suitable for molding a light guide. The polymeric material may be a reactive or a crosslinkabel polymeric material. It can be desirable to use a polyurethane material. Suitable results have been obtained using a two-part thermosetable polyurethane material.

When making an illumination device according to the present invention, preferably curable polymeric materials including (such as) polyurethanes comprising the polymerization reaction product of one or more polyisocyanates with one or more polyols are used. Preferably, the polyurethanes useful in the present invention are thermoplastics and thermosets, and are substantially optically transparent and/or capable of transmitting visible light.

Preferred polyurethanes comprise either flexible or rigid, thermoplastic or thermoset aliphatic polyurethanes. Useful aliphatic polyurethanes can be formed from reactions of polyester polyols with polyisocyanates and, optionally, chain extenders.

The incorporation of hard segments in the formulation is optional. Hard segments may improve the strength and may increasing the refractive index of the polyurethane waveguide, as needed, provided that they do not adversely affect the light transmissive properties of the waveguide of the invention.

In addition to the urethane linkage, optionally there may be various amounts of other linkages such as isocyanurates, biurets, allophonates, amides, or oxazolidones present in the waveguide. In these instances, additional polyisocyanate beyond the amount previously described would be required, but the additional linkages cannot be present to such an extent that they would cause phase separation resulting in light scattering, thereby reducing the effectiveness of the waveguide. In addition, plasticizers such as dibutyl adipate, catalysts such as dibutyltin dilaurate, and other additives such as stabilizers and antioxidants may be added in amounts necessary to assure satisfactory product performance.

Aliphatic polyurethanes useful in the invention may be blended with other optically clear polymers, provided that the blend is compatible, or that the domains formed are small and do not scatter light which would reduce the effectiveness of the resulting light guide. Additional components of the light guide may be the same as described in applicants patent EP 1 066 143 B1 para [0056] to [0067].

If polyurethane is used as the liquid polymeric material the method according to the invention provides basically the following advantages. The proposed use of an additional stretchable layer in the mold performs as a seal and allows for higher cavity pressures without additional clamping forces. Since the stretchable layer does cover the fluid polymeric material which will become a light guide, when cured, at least partially, the light guide can also release from the cavity while shrinking homogeneously. The stretchable layer also prevents surface damage which might occur from sticking to the surface of the cavity. Because of the fact that the stretchable layer will eliminate any contact of the polyurethane with one mold half the method according to the invention reduces the mold cleaning times significantly.

According to another embodiment the mold may comprise a first mold part and a second mold part, that define the mold cavity, with the first cavity part being located in the first mold part and the second cavity part being located in the second mold part. First and second cavity parts are located such in the first and the second mold that they build one cavity in a closed position of the two mold parts. The cavity may be dimensioned and designed (i.e. operatively adapted) for molding the light guide. An exemplary mold includes a cavity comprising a first cavity part located in the first mold part and a second cavity part located in the second mold part. It can be desirable for the first cavity part to be the lower cavity part of the mold and for the second cavity part to be the upper cavity part of the mold. It is of course also possible for the first cavity part to be the upper cavity part of the mold and for the second cavity part to be the lower cavity part of the mold. The mold according to the invention may also comprise several cavities, each cavity providing a first cavity part and a second cavity arranged such and operatively adapted such that several light guides may be molded in one mold within one step.

The shape of the cavity parts may be selected such that the profile of the light guide has a mushroom shape, a wedge shape, an ice-cone shape, a circle shape or a trapezoid shape.

According to yet another embodiment of the invention the disposing of the stretchable layer within the mold so as to separate the first and second cavity parts comprises closing the first and the second mold parts together (bringing them in the closed position) so as to enclose the stretchable layer there between. In other words to open the mold, the first cavity part is separated from the second cavity part by separating the first mold part from the second mold part (bringing them in an open position). The stretchable layer is disposed within the open mold, between the first and second mold part. The mold is then closed by moving the mold parts together until the stretchable layer is captured between the mold parts so as to separate the first and second cavity parts. As described above, by being positioned between the two mold parts the stretchable layer may function as a seal between the mold parts preventing a discharge of fluid polymeric material during the injection

The first and the second mold parts may form a parting line there between (between them), when the first and the second mold parts are closed or brought in the closed position, and the stretchable layer may be disposed within this parting line area.

The stretchable layer may be in the form of a sheet, foil or film. The stretchable layer may comprise one or more layers. The use of a stretchable layer with more than one layer may provide the advantage of being able to combine the characteristics of different materials. If the stretchable layer has a surface with a certain structure it is possible to influence the structure of the surface of the light guide. For example it is possible to make a light guide with a matt surface. The matt surface may be arranged opposite to the light extraction elements. This may lead to a uniform light output along the light guide and may cover miner imperfections in the extraction element or in the light guide. The surface roughness can be modified without additional process steps by using a different stretchable layer in the above described process. It is even possible to provide a light extraction structure on the stretchable layer. The stretchable layer may also provide a low energy surface thereby providing the advantage of being able to easy release the stretchable layer from the cavity surface and from the light guide.

According to another embodiment, the stretchable layer may completely separate the first cavity part from the second cavity part.

During the injection step, the fluid polymeric material may be injected into the first cavity part of the mold at a pressure that forces the stretchable layer to stretch into the second cavity part. After the first cavity part is substantially filled with the polymeric material, the pressure forces the stretchable layer to expand into the second cavity part. Thereby the second cavity part may to be substantially filled with the fluid polymeric material. After the injection step the fluid polymeric material is surrounded by the surface of the first cavity part of the first mold and the stretchable layer, whereby the stretchable layer may be positioned at the surface of the second cavity part or it may be positioned spaced apart from the surface of the second cavity. It is also possible to use a vacuum or negative pressure to stretch the stretchable layer into the second cavity part towards the surface of the second cavity part.

During the injection step, the first and the second cavity parts may be completely filled with the fluid polymeric material.

The solidified fluid polymeric material may form a flexible light guide. Depending on the kind of polymeric material that is used, it is also possible that the light guide is stiff or rigid.

The solid light guide may be removed from the mold cavity, along with the stretchable layer. In an additional step, the stretchable layer may then be removed from the solid light guide. It is also possible, that the stretchable layer and the solid light guide are removed from the mold in two separate steps, e.g. first the stretchable layer is removed and then the solid light guide is removed. Therefore the stretchable layer may need to be selected such that it does not stick to the mold and to the solidified light guide. In an alternative embodiment the stretchable layer is attached to either the first or the second mold part such that it may be reused several times and is not removed after the solidifying step.

The present invention also provides an optically transparent light guide being manufactured by the following steps:
- providing a fluid polymeric material suitable for molding a light guide;
- providing a rigid mold comprising a mold cavity operatively adapted for molding the light guide, with the mold cavity comprising a first cavity part and a second cavity part;
- disposing a stretchable layer within the mold between the first and second cavity parts;
- injecting the fluid polymeric material into the first cavity part of the mold cavity so as to at least substantially fill the first cavity partand at least part of the second cavity part with the fluid polymeric material;
- stretching the stretchable layer so as to be disposed at least partially into the second cavity part;
- solidifying the fluid polymeric material to form a solid light guide in the mold cavity; and
- removing the solid light guide from the mold cavity.

The present invention also provides a molded, e.g. injection molded, optically transparent light guide having an exterior surface in combination with a stretchable layer in contact with said exterior surface.

The invention will now be described in more detail with reference to the following Figures exemplifying particular embodiments of the invention:
Fig. 1 steps of manufacturing an optically transparent light guide according to one embodiment of the invention;
Fig. 2 steps of manufacturing an optically transparent light guide according to another embodiment of the invention;
Fig.3 several embodiments of molds according to the invention with differently shaped cavities; and
Fig. 4 a light guide with a special notch design.

Herein below various embodiments of the present invention are described and shown in the drawings wherein like elements are provided with the same reference numbers.

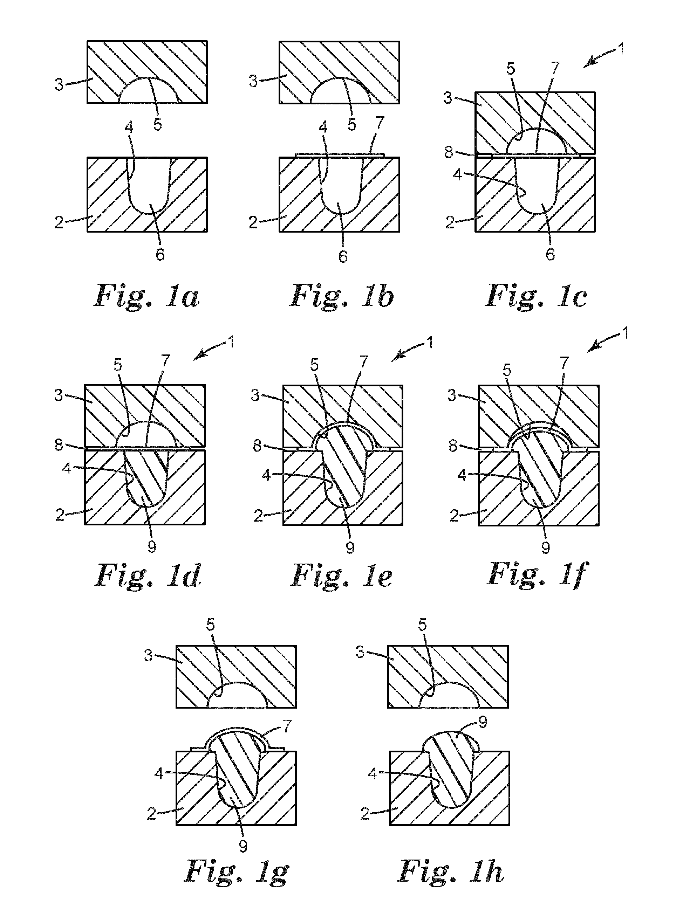

In Fig. 1 the steps of manufacturing an optically transparent light guide according to one embodiment of the invention are shown. Fig. 1 does show a mold 1 with two mold parts - a first, lower mold part 2 and a second, upper mold part 3. The first mold part 1 comprises a first cavity part 4 and the second mold part 3 comprises a second cavity part 5. First and second cavity parts 4 and 5 build together the mold cavity 6 which is operatively adapted for molding an optically transparent light guide.

According to the invention a stretchable layer 7 is disposed within the mold 1 so as to separate the first cavity part 4 and the second cavity part 5. Disposing the stretchable layer 7 in the mold 1 is done by opening first and second mold parts 2 and 3 (bringing them into an open position, where they do not touch each other) thereby also opening first and second cavity parts 4 and 5 (see Fig. 1a). Then the stretchable layer is positioned between the first and second mold parts 2 and 3 (see Fig. 1 b) such that after closing the mold parts 2 and 3, the stretchable layer is disposed within an area of a parting line 8 between the first and second mold parts 2 and 3 (see Fig. 1c).

In the next step - shown in Fig. 1d - the fluid polymeric material 9, which is suitable for molding a light guide, is provided and filled in the first cavity part 4 of the lower mold part 2. The filling is done without pressure. A vent is open in this process step to enable the air in the first cavity part 4 to disappear. The first cavity part 4 may provide a certain structure, which creates a light extraction structure on the light guide. As soon as the first cavity part 4 has been filled volumetrically, the vent is closed and pressure is applied to the cavity 6 by providing more fluid polymeric material. The pressure may be selected such that it forces the stretchable layer to stretch into the second cavity part as can be seen in Fig. 1 e. The stretchable layer may be stretched until it touches the inner surface of the second, upper cavity part 5 and the light guide has the desired shape.

After filling the cavity 6, the light guide solidifies. Depending on the kind of fluid polymeric material that is used, the light guide shrinks during the solidifying process (see Fig. 1f). Due to the elastic properties of the stretchable layer, the stretchable layer follows the movement of the shrinking light guide thereby always covering the surface of the light guide and helping the light guide 9 to shrink homogeneously as well as preventing surface damage which might occur from sticking to the surface of the cavity.

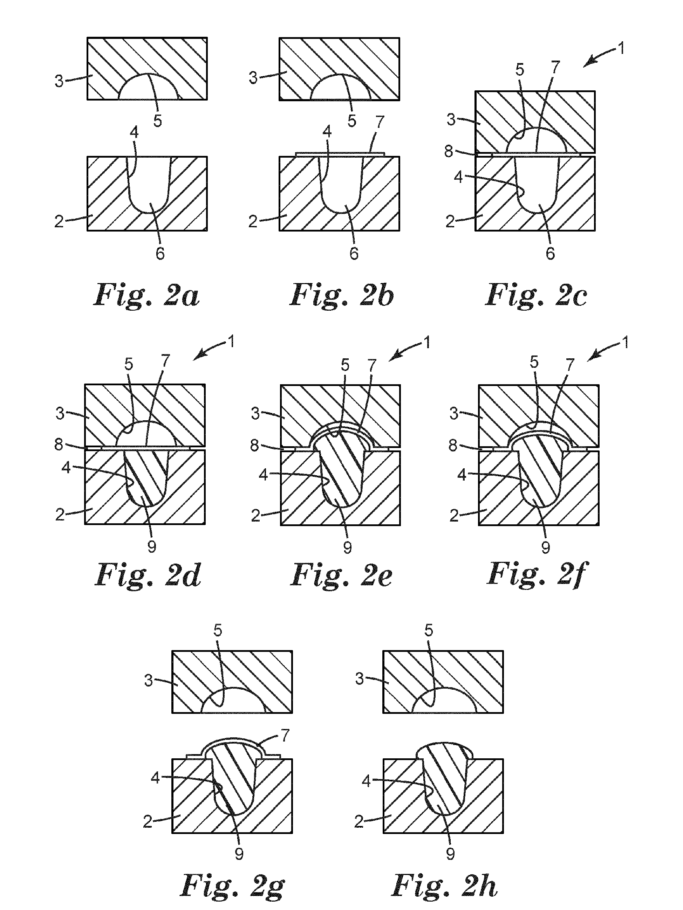

Depending on the process parameters and the kind of stretchable layer that is used it is also possible, that in the step shown in Fig.1e the second cavity part 5 of the mold 1 is not completely filled (see process shown in Figs 2a to 2h). This might for example happen, if the stretchable layer is less elastic than in the embodiment shown in Figs 1 a to 1 h.

In the last step of the process according to the invention the solid light guide 9 is removed from the mold cavity 6. This may be done by first bringing the first and second mold parts 2 and 3 in an open position again (Fig. 1g), removing the stretchable layer 7 and then demolding the light guide 9. In this process step several alternatives are possible, such as for example, the light guide 9 is removed together with the stretchable layer 7. This might happen, when the light guide 9 sticks to the stretchable layer 7.

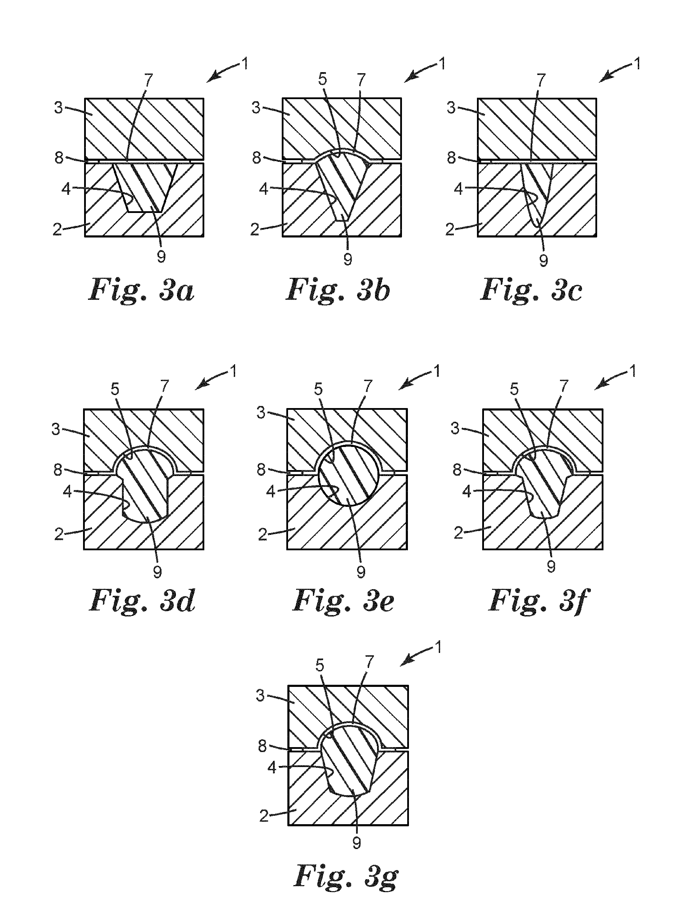

In Fig. 3 several embodiments of molds 1 with a light guide 9 are shown, each mold 1 providing differently shaped cavity parts 4 and 5. Fig. 3a and c do show cavities with a trapezoid and a parable shape, which are totally integrated into the first cavity part 4 of the first mold part 2, such that there is no need for a second cavity part. The molds 1 of Fig. 3b and g are wedge shaped and extend in the first mold part 2 and the second mold part 3. So are the mushroom shaped cavities of Fig. 3d and 3f as well as the cavity of Fig. 3e with a light guide having a circle shaped profile. In all embodiments a stretchable layer 7 is used during the process of making the light guide 9 as described before.

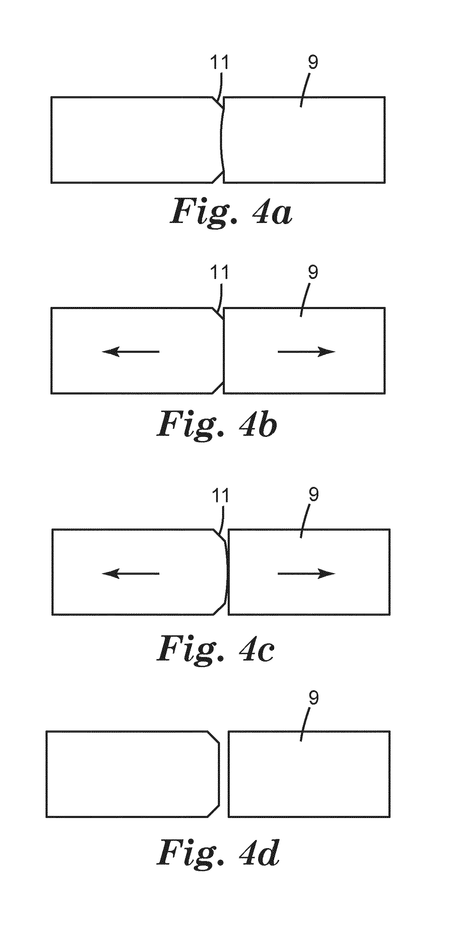

Fig. 4 a to d show a light guide 9 with a special shaped notch 11 which can be advantageous if polyurethane is used for making the light guide 9. The notch 11 does surround the light guide completely (it is formed 360 degrees around the light guide). It is also possible that the notch surrounds the light guide less than 360 degrees, for example 270 degrees, 180 degrees, 90 degrees or less. It is also possible that the notch partially surrounds the light guide at several locations. The notch 11 shown in Fig. 4 a to d has a v-shaped cross section. The notch 11 can be brought into the light guide 9 for example by adding a v-shaped structure into the cavity of the mold. With this notch 11 it is possible to tear-of waste ends of the light guide 9, while the light guide 9 is still at an elevated temperature. After crosslinking of the polyurethane is completed and the mold is opened, the light guide has a temperature of roughly 90°C. The special shaped notch 11 can be used as predetermined breaking point and the light guide can be brought into a predetermined length by just pulling at two ends arranged on the two sides of the notch 11 (see Fig. 4b and 4c). The surface of the torn ends of the light guide are crystal clear and highly transparent. An extra process step of cutting the light guide (as well as the cutting machine) can be removed. The separating step with the use of the special designed notches 11 (breaking points) can be done during unloading the injection moulding tool and does neither require additional operator time nor equipment. The single steps may be the following:

A special shaped notch 11 is designed in the mold for example at both ends of the cavity. The notch 11 has been designed to give a cut surface perpendicular to the axis of the light guide. Upon unloading of the mold the operator pulls at both ends of the light guide 9 causing the breaking at predetermined breaking points (notch 11). The cross-linked polyurethane breaks easily at reaction temperature resulting in a highly transparent surface.

## Claims

1. Method of manufacturing an optically transparent light guide, said method comprising
- providing a fluid polymeric material suitable for molding a light guide;
- providing a rigid mold comprising a mold cavity operatively adapted for molding the light guide, with the mold cavity comprising a first cavity part and a second cavity part;
- disposing a stretchable layer within the mold between the first and second cavity parts;
- injecting the fluid polymeric material into the first cavity part of the mold cavity so as to at least substantially fill the first cavity part, and at least part of the second cavity part with the fluid polymeric material;
- stretching the stretchable layer so as to be disposed at least partially into the second cavity part;
- solidifying the fluid polymeric material to form a solid light guide in the mold cavity; and
- removing the solid light guide from the mold cavity.

2. The method according to claim 1, wherein the fluid polymeric material is a liquid thermosetable polymeric material.

3. The method according to any of the preceding claims, wherein the fluid polymeric material is a polyurethane material.

4. The method according to any of the preceding claims, wherein the mold comprises a first mold part and a second mold part that define the mold cavity, with the first cavity part being located in the first mold part and the second cavity part being located in the second mold part.

5. The method according to any of the preceding claims, wherein the first cavity part is a lower cavity part and the second cavity part is an upper cavity part.

6. The method according to claim 5 or 6, wherein said disposing the stretchable layer within the mold comprises closing the first and second mold parts together so as to enclose the stretchable layer there between.

7. The method according to claim 7, wherein the first and second mold parts form a parting line area there between, when the first and second mold parts are closed, and the stretchable layer is disposed within the parting line area.

8. The method according to any of the preceding claims, wherein the stretchable layer is in the form of a sheet, foil or film.

9. The method according to any of the preceding claims, wherein the stretchable layer completely separates the first and second cavity parts.

10. The method according to any of the preceding claims, wherein during said injecting step, the fluid polymeric material is injected into the first cavity part of the mold at a pressure that forces the stretchable layer to stretch into the second cavity part.

11. The method according to any of the preceding claims, wherein during said injecting step, the first cavity part and the second cavity part are completely filled with the fluid polymeric material.

12. The method according to any of the preceding claims, wherein the solidified fluid polymeric material forms a flexible light guide.

13. The method according to any of the preceding claims, wherein the solid light guide is removed from the mold cavity, along with the stretchable layer.

14. An optically transparent light guide (9) being manufactured by the following steps:
- providing a fluid polymeric material (9) suitable for molding a light guide;
- providing a rigid mold (1) comprising a mold cavity (6) operatively adapted for molding the light guide, with the mold cavity comprising a first cavity part (4) and a second cavity part (5)
- disposing a stretchable layer (7) within the mold between the first and second cavity parts;
- injecting the fluid polymeric material into the first cavity part of the mold cavity so as to at least substantially fill the first cavity partand at least part of the second cavity part with the fluid polymeric material;
- stretching the stretchable layer so as to be disposed at least partially into the second cavity part;
- solidifying the fluid polymeric material to form a solid light guide in the mold cavity; and
- removing the solid light guide from the mold cavity.

15. An molded light guide (9) having an exterior surface in combination with a stretchable layer (7) in contact with said exterior surface.

## Amended claims

### Amended claims in accordance with Rule 137(2) EPC.

**1.** Method of manufacturing an optically transparent light guide, said method comprising
- providing a fluid polymeric material suitable for molding a light guide;
- providing a rigid mold comprising a mold cavity operatively adapted for molding the light guide, with the mold cavity comprising a first cavity part and a second cavity part;
- disposing a stretchable layer within the mold between the first and second cavity parts;
- injecting the fluid polymeric material into the first cavity part of the mold cavity so as to at least substantially fill the first cavity part, and at least part of the second cavity part with the fluid polymeric material; wherein the fluid polymeric material is injected into the first cavity part of the mold at a pressure that forces the stretchable layer to stretch into the second cavity part;
- solidifying the fluid polymeric material to form a solid light guide in the mold cavity; and
- removing the solid light guide from the mold cavity.

**2.** The method according to claim 1, wherein the fluid polymeric material is a liquid thermosetable polymeric material.

**3.** The method according to any of the preceding claims, wherein the fluid polymeric material is a polyurethane material.

**4.** The method according to any of the preceding claims, wherein the mold comprises a first mold part and a second mold part that define the mold cavity, with the first cavity part being located in the first mold part and the second cavity part being located in the second mold part.

**5.** The method according to any of the preceding claims, wherein the first cavity part is a lower cavity part and the second cavity part is an upper cavity part.

**6.** The method according to claim 5 or 6, wherein said disposing the stretchable layer within the mold comprises closing the first and second mold parts together so as to enclose the stretchable layer there between.

**7.** The method according to claim 7, wherein the first and second mold parts form a parting line area there between, when the first and second mold parts are closed, and the stretchable layer is disposed within the parting line area.

**8.** The method according to any of the preceding claims, wherein the stretchable layer is in the form of a sheet, foil or film.

**9.** The method according to any of the preceding claims, wherein the stretchable layer completely separates the first and second cavity parts.

**10.** The method according to any of the preceding claims, wherein during said injecting step, the first cavity part and the second cavity part are completely filled with the fluid polymeric material.

**11.** The method according to any of the preceding claims, wherein the solidified fluid polymeric material forms a flexible light guide.

**12.** The method according to any of the preceding claims, wherein the solid light guide is removed from the mold cavity, along with the stretchable layer.

**13.** A molded light guide (9) having an exterior surface in combination with a stretchable layer (7) in contact with said exterior surface.
